# EUROPEAN PATENT SPECIFICATION

(11) **EP 1 095 580 B1**
(45) Date of publication and mention of the grant of the patent: **03.08.2005**
(21) Application number: 00122342.9
(22) Date of filing: 23.10.2000
(51) Int. Cl.: A43B 7/12, A43B 23/06, B29D 31/505, B29D 31/50, B29D 31/515, B29D 31/518

(54) **Method for manufacturing a boot made of synthetic material**
Verfahren zur Herstellung eines Stiefels aus Kunststoff
Procédé de fabrication d'une botte en matériau synthétique

(30) Priority: 25.10.1999 IT TV990114
(43) Date of publication of application: 02.05.2001
(73) Proprietor: MYTYM S.R.L., 31033 Castelfranco Veneto (Treviso) (IT)
(72) Inventor: Cavallin, Camillo, 31050 Fanzolo di Vedelago (Treviso) (IT)
(74) Representative: Modiano, Guido, Dr.-Ing.

(56) References cited:
- EP-A- 0 792 595
- EP-A- 0 793 921
- WO-A-98/14081
- FR-A- 2 116 790
- GB-A- 2 249 940
- US-A- 5 647 150

## Description

The present invention relates to a method for manufacturing a boot made of synthetic material.

Waterproof boots, generally made of synthetic material such as rubber, PVC, polyurethane or other plastic materials, are currently frequently used.

The method for manufacturing these conventional boots generally consists in injecting into molds, usually made of aluminum or steel, plastic material at a suitable last.

The materials and the method used have the advantage of having low manufacturing costs which lead to a substantially cheap product.

However, these conventional boots, due to the material used, suffer the main drawback that they do not allow perspiration of the foot through the shoe: the consequent problems relate not only to comfort but also to the general health of the foot.

As an alternative to such conventional boots, it is possible to use boots made of leather or other ventilated fabric.

The main drawback of these further conventional boots is that owing to the materials used and to the type of manufacturing process required by the materials, the manufacturing cost is much higher than the boots made of synthetic material, placing them in a different market tier.

Moreover, these conventional boots are not entirely waterproof and accordingly do not solve the problem of the need to have a shoe which is ventilated and at the same time waterproof. A boot comprising injection-molded material and a sock is known from US-A-5 647 150.

The aim of the present invention is to solve the above-noted problems, eliminating the drawbacks of the cited prior art, by providing a boot which is waterproof and at the same time ventilated.

Within the scope of this aim, an object of the present invention is to provide a boot whose manufacturing costs are compatible with those of the boots made of synthetic material.

Another object is to provide a boot which allows to achieve the intended aim and also allows to obtain a comfortable product.

A still further object is to provide a boot which is structurally simple and has low manufacturing costs.

This aim and these and other objects which will become better apparent hereinafter are achieved by the method of claim 1.

Further characteristics and advantages of the invention will become better apparent from the following detailed description of a particular embodiment thereof, illustrated only by way of non-limitative example in the accompanying drawings, wherein:
Figure 1 is a side view of a first last for manufacturing a boot by means of a first embodiment of the method according to the present invention;
Figure 2 is a side view of a second last for manufacturing a boot by means of a second embodiment of the method according to the present invention;
Figure 3 is a side view of a first mold for manufacturing a boot by means of the method according to the first embodiment;
Figure 4 is a side view of a second mold for manufacturing a boot by means of the method according to the second embodiment;
Figure 5 is a side view of a boot obtained by means of the method according to the first embodiment;

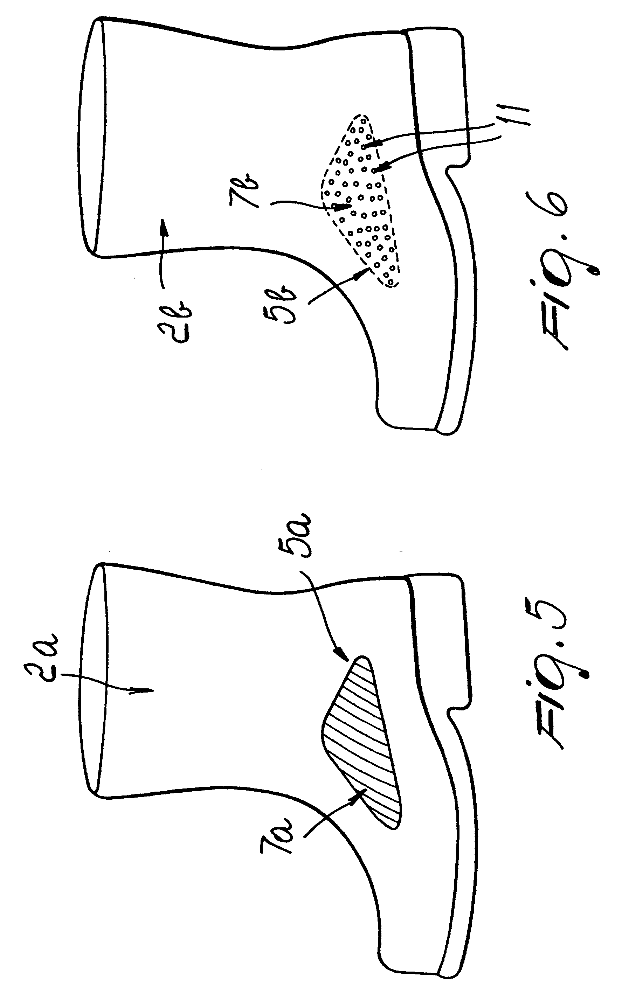

Figure 6 is a side view of a boot obtained by means of the method according to the second embodiment.

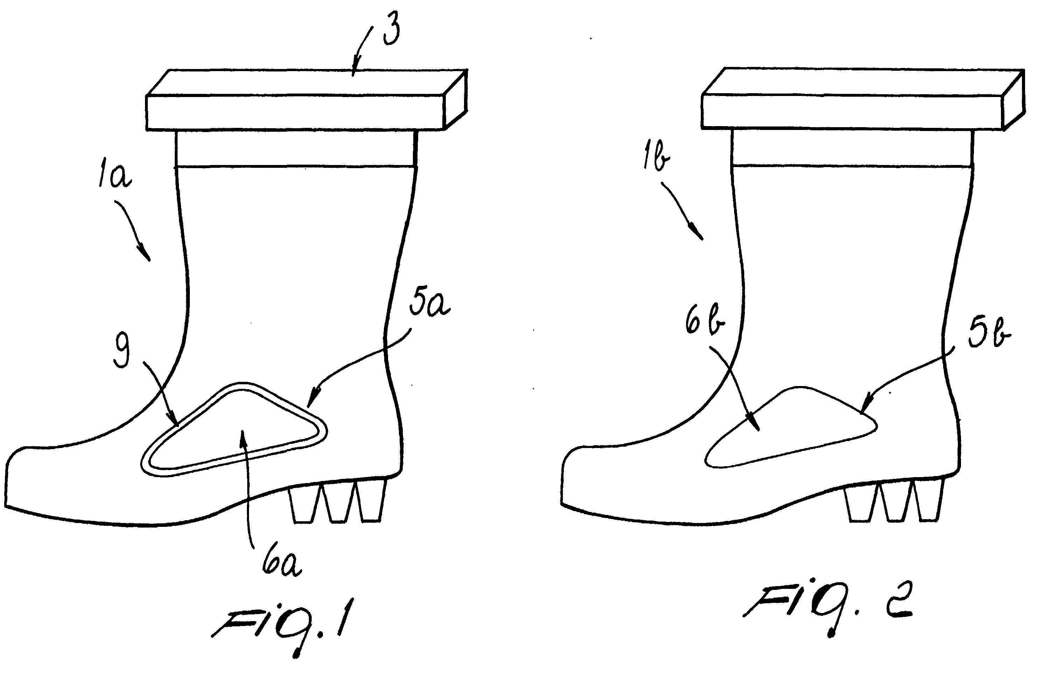

With reference to Figure 1, the reference numeral 1a designates a last for the injection-molding of a boot, designated by the reference numeral 2a.

The last 1a, advantageously made of steel or aluminum, is provided in an upward region with a coupling element, designated by the reference numeral 3, for the engagement and insertion of the last 1a in a mold 4a which is also advantageously made of steel or aluminum.

At least on an outer side of the last 1a there is, at a region designated by the reference numeral 5a, a seat 6a which has any chosen shape; by way of example, a shape which is advantageously triangular with rounded corners has been illustrated.

The region 5a advantageously relates to a portion of the foot that is arranged below the ankle and in front of it, on the outer and/or inner side of the foot.

The seat 6a is adapted for the arrangement of a complementarily shaped element, designated by the reference numeral 7a, which is composed of a material which is advantageously synthetic, waterproof and permeable to air.

A ridge, designated by the reference numeral 8a, is formed in the mold 4a at the region 5a, is shaped complementarily to the seat 6a and is adapted to interact with the element 7a.

A first embodiment of the method for obtaining the boot 2a consists in applying the element 7a inside the seat 6a and in subsequently arranging the last 1a inside the mold 4a.

Then the mold 4a is closed so as to make the ridge 8a mate with the seat 6a, element 7a being interposed between the two parts.

By using injection-molding machines, synthetic material, such as rubber, is injected so as to affect the last and, only peripherally, the seat 6a, since the seat is shaped, with respect to the ridge 8a, so as to allow contact between the injected material and the element 7a only in a peripheral band thereof, designated by the reference numeral 9.

In this manner, the element 7a is rigidly coupled inside the boot 2a by way of the injection, which causes the bonding, at the peripheral band 9, between the outer edge of element 7a and the respective rubber surface of the boot 2a.

The result is a waterproof rubber boot 2a which has, proximate to region 4a, a surface which allows the passage of gaseous substances and particularly of water vapor from the inside to the outside of the boot.

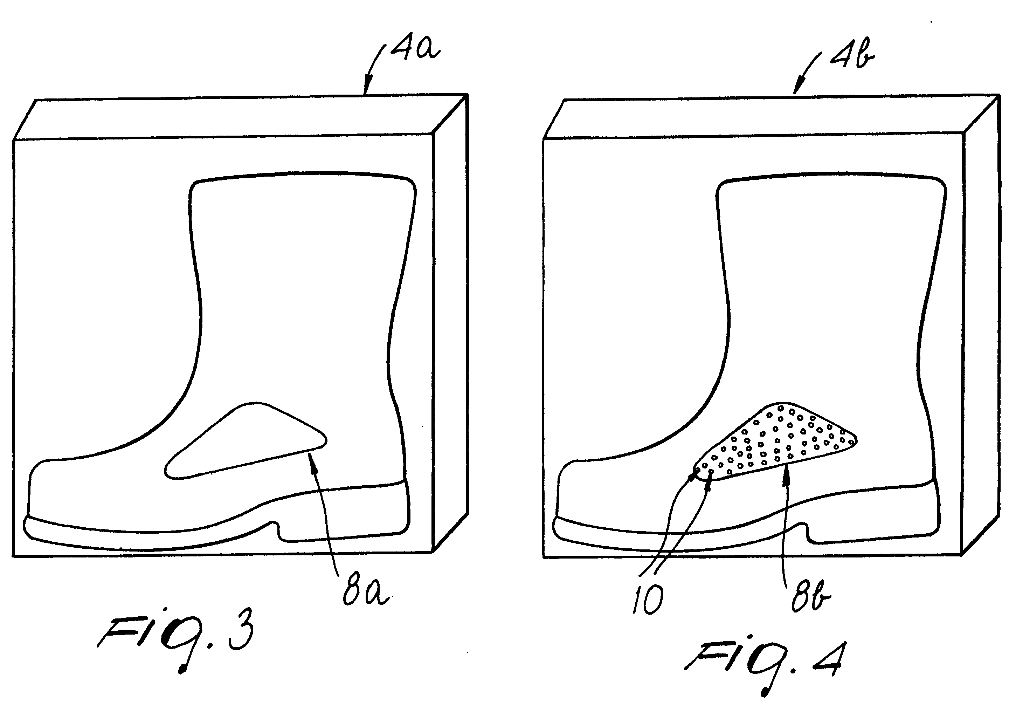

With reference to Figure 2, the reference numeral 1b designates a second embodiment of last for the injection-molding of a similar boot, designated by the reference numeral 2b.

The last 1b has, at a region 5b which advantageously coincides with region 5a, a seat 6b for accommodating a complementarily shaped element, designated by the reference numeral 7b, which is advantageously identical to element 7a.

The seat 6b differs from the seat 6a in that it is shaped so as to allow the seepage of the injected material on all the element 7b outside it.

At the region 5b there is, in a mold 4b, a ridge, designated by the reference numeral 8b, which is shaped complementarily to the seat 6b and inside which a plurality of raised portions, generally designated by the reference numeral 10, are formed.

The raised portions 10 protrude from the surface of the mold that is delimited by the ridge 8b, so as to be arranged in contact with the facing parts of the element 7b once the mold has been closed; upon injection of the synthetic material, they prevent its seepage in the parts of the element 7b that are in contact with the ends of the raised portions.

In this manner, when the boot 2b is extracted from the mold 4b, a plurality of holes, designated by the reference numeral 11, are formed at the areas that were covered by the raised portions 10 through the rubber of the boot 2b; the holes are suitable for perspiration through element 7b.

Use is therefore as follows: with reference to the figures, the boots 2a and 2b, which are equivalent in terms of functionality, can be used in the presence of water since their outer surface is entirely constituted by waterproof materials, such as rubber and appropriate waterproof synthetic materials.

The boots 2a and 2b allow optimum comfort of the foot inside them by virtue of the fact that at at least one region 5a or 5b they have elements 7a or 7b which are made of synthetic material which is not only waterproof but also ventilated.

Such elements are connected on one side to the inside of the boot and on the other side to the outside environment, allowing advantageous perspiration of the foot.

It has thus been observed that the invention has achieved the intended aim and objects, a boot and a method for obtaining a boot which is at once waterproof and ventilated having been obtained.

The invention is of course susceptible of numerous modifications and variations within the scope of the amended claims.

The materials used, as well as the dimensions that constitute the individual components of the invention, may of course be more pertinent according to specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for obtaining a boot (2a, 2b) made of synthetic material by means of injection-molding machines, **characterized in that** it comprises the steps of:
providing, on a lateral surface of a first last (1a), at least one seat (6a) for a complementary shaped element (7a, 7b) made of a fabric which is waterproof and permeable to air;
providing a mold (4a, 4b) comprising a ridge (8a, 8b) which is shaped complementarily to said seat (6a, 6b);
positioning said element (7a, 7b) in said seat (6a, 6b);
closing said mold (4a, 4b) so as to make the ridge (8a, 8b) mate with the seat (6a, 6b);
injecting said synthetic material so as to affect said last (1a, 1b) and, peripherally, said at least one seat (6a, 6b) so as to bond the outer edge of said element (7a, 7b) to the surface of the boot (2a, 2b).

2. The method according to claim 1, **characterized in that** said last is made of steel or aluminum.

3. The method according to claim 1, **characterized in that** said seat is located at a region (5a, 5b) affecting a portion of the foot that lies below and in front of the ankle, on the outer and/or inner side of the foot.

4. The method according to claim 3, **characterized in that** said region is triangular with rounded corners.

5. The method according to any of the preceding claims, **characterized in that** said seat is shaped, with respect to said ridge, so as to allow contact between the injected synthetic material and said element only in a peripheral band thereof.

6. The method according to any of claims 1 to 4, **characterized in that** it one or more raised portions (10) are present in said mold (4b) and protrude at said at least one seat (6b) so as to form, for said boot (2b), one or more holes which are adapted to connect said element (7b) to the outside; and
said ridge (8b) allows the seepage of the injected material throughout the surface of said element (7b) that is not affected by the presence of said raised portions (10).

## Patentansprüche

1. Verfahren zum Herstellen eines Stiefels (2a, 2b) aus Kunststoffmaterial mittels Spritzgussmaschinen, **dadurch gekennzeichnet, dass** es die folgenden Schritte umfasst:
Bereitstellen mindestens eines Sitzes (6a) für ein komplementär geformtes Element (7a, 7b), das aus einem Stoff besteht, der wasserdicht und luftdurchlässig ist, auf einer Seitenfläche eines ersten Leisten (1a);
Bereitstellen einer Form (4a, 4b), die einen Wulst (8a, 8b) umfasst, der komplementär zu dem Sitz (6a, 6b) geformt ist;
Positionieren des Elements (7a, 7b) in dem Sitz (6a, 6b);
Schließen der Form (4a, 4b), um den Wulst (8a, 8b) mit dem Sitz (6a, 6b) zusammenzufügen;
Einspritzen des Kunststoffmaterials, so dass dieses auf den Leisten (1a, 1b) und peripher auf den mindestens einen Sitz (6a, 6b) wirkt, um die Außenkante des Elements (7a, 7b) mit der Oberfläche des Stiefels (2a, 2b) zu verbinden.

2. Verfahren nach Anspruch 1, **dadurch gekennzeichnet, dass** der Leisten aus Stahl oder Aluminium besteht.

3. Verfahren nach Anspruch 1, **dadurch gekennzeichnet, dass** der Sitz in einem Bereich (5a, 5b) angeordnet ist, der auf einen Teil des Fußes wirkt, der unterhalb des Knöchels und vor diesem auf der Außen- und/oder Innenseite des Fußes liegt.

4. Verfahren nach Anspruch 3, **dadurch gekennzeichnet, dass** der Bereich dreieckig mit abgerundeten Ecken ist.

5. Verfahren nach einem der vorhergehenden Ansprüche, **dadurch gekennzeichnet, dass** der Sitz bezüglich des Wulstes so geformt ist, dass er einen Kontakt zwischen dem eingespritzten Kunststoffmaterial und dem Element nur in einem peripheren Band desselben erlaubt.

6. Verfahren nach Anspruch 1 bis 4, **dadurch gekennzeichnet, dass** ein oder mehrere erhabene Abschnitte (10) in der Form (4b) vorgesehen sind, die an dem mindestens einen Sitz (6b) hervorstehen, um für den Stiefel (2b) ein oder mehrere Löcher zu bilden, die ausgebildet sind, das Element (7b) mit der Außenseite zu verbinden; und
dass der Wulst (8b) das Versickern des eingespritzten Materials überall dort auf der Oberfläche des Elements (7b) erlaubt, wo diese nicht durch das Vorhandensein der erhabenen Abschnitte (10) beeinflusst ist.

## Revendications

1. Procédé pour obtenir une botte (2a, 2b) réalisée en matière synthétique par l'intermédiaire de machines d'injection-moulage,
**caractérisé en ce qu'**il comprend les étapes de :
prévoir, sur une surface latérale d'une première forme (1a), au moins un siège (6a) pour un élément façonné de façon complémentaire (7a, 7b) réalisé en un tissu qui est étanche à l'eau et perméable à l'air ;
prévoir un moule (4a, 4b) comprenant une arête (8a, 8b) qui est conformée de façon complémentaire audit siège (6a, 6b) ;
positionner ledit élément (7a, 7b) dans ledit siège (6a, 6b) ;
fermer ledit moule (4a, 4b) de façon que l'arête (8a, 8b) s'adapte avec le siège (6a, 6b) ;
injecter ladite matière synthétique de façon à atteindre ladite forme (1a, 1b) et, périphériquement, ledit siège (6a, 6b) de façon à lier le bord externe dudit élément (7a, 7b) à la surface de la botte (2a, 2b).

2. Procédé selon la revendication 1,
**caractérisé en ce que** ladite forme est réalisée en acier ou en aluminium.

3. Procédé selon la revendication 1,
**caractérisé en ce que** ledit siège est situé au niveau d'une région (5a, 5b) atteignant une partie du pied qui se trouve sous et devant la cheville, sur le côté externe et/ou interne du pied.

4. Procédé selon la revendication 3,
**caractérisé en ce que** ladite région est triangulaire avec des coins arrondis.

5. Procédé selon une quelconque des revendications précédentes,
**caractérisé en ce que** ledit siège est façonné, par rapport à ladite arête, de façon à permettre le contact entre la matière synthétique injectée et ledit élément seulement dans une bande périphérique de celui-ci.

6. Procédé selon une quelconque des revendications 1 à 4,
**caractérisé en ce qu'**une ou plusieurs parties en relief (10) sont présentes dans ledit moule (4) et font saillie au niveau dudit siège (6b) de façon à former, pour ladite botte (2b), un ou plusieurs trous qui sont prévus pour relier ledit élément (7b) à l'extérieur ; et
ladite arête (8b) permet l'infiltration de ladite matière injectée dans toute la surface dudit élément (7b) qui n'est pas atteinte par la présence desdites parties en relief (10).
